# EUROPEAN PATENT SPECIFICATION

(11) **EP 2 645 522 B1**
(45) Date of publication and mention of the grant of the patent: **26.11.2014**
(21) Application number: 12180853.9
(22) Date of filing: 17.08.2012
(51) Int. Cl.: H02J 7/00, H02J 3/32, H02J 3/38

(54) **A battery storage device for distributed hybrid powered smart grid system and control method thereof**
Batteriespeichersystem für ein verteiltes hybridbetriebenes intelligentes Stromsystem und Steuerverfahren dafür
Système d'accumulateurs pour système de réseau intelligent alimenté hybride et son procédé de commande

(30) Priority: 31.03.2012 CN 201210094291
(43) Date of publication of application: 02.10.2013
(73) Proprietor: Northeastern University, Shenyang Liaoning 110819 (CN)
(72) Inventor: Zhang, Huaguang, 110819 Shenyang (CN); Sun, Qiuye, 110819 Shenyang Liaoning (CN); Jiang, Bin, 210016 Nanjing Jiangsu (CN); Yang, Jun, 110819 Shenyang Liaoning (CN); Liu, Xinrui, 110819 Shenyang Liaoning (CN); Ma, Dazhong, 110819 Shenyang Liaoning (CN); Liu, Zhenwei, 110819 Shenyang Liaoning (CN); Wang, Zhanshan, 110819 Shenyang Liaoning (CN); He, Zhiqiang, 110819 Shenyang Liaoning (CN); Teng, Fei, 110819 Shenyang Liaoning (CN); Guo, Jing, 110819 Shenyang Liaoning (CN); Li, Xintong, 110819 Shenyang Liaoning (CN); Liang, Junsheng, 110819 Shenyang Liaoning (CN); Li, Yushuai, 110819 Shenyang Liaoning (CN); Cui, Jin, 110819 Shenyang Liaoning (CN)
(74) Representative: Decamps, Alain René François

(56) References cited:
- EP-A2- 1 968 167
- DE-A1-102008 000 560

## Description

### Technical Field

The present invention belongs to the technical field of new energy power generation and electrical technology, in particularly to a distributed hybrid powered smart grid system and control method thereof.

### Background

With the increasingly serious energy crises and environmental problems, people pay close attention to the power generation technology with clean and renewable energy. As one of the methods to utilize new energy, the development of a new-energy distributed power generation system becomes more and more popular. The new-energy distributed power generation system is characterized in that power capacity from the system is very small and is distributed around the loads, and the system is mainly used to supply power to the loads nearby. Unlike traditional centralized power generation, power transmission and power distribution, the distributed power generation system can accomplish on-site power generation and on-site power consumption. Therefore, power losses and environmental problems due to power transmission are greatly reduced, and the shortage of overhead line corridors because of the upgrading of power grid to meet the growth of loads is solved. In addition, the distributed power generation system improves the reliability of power grid.

As a new generation of the power generation technology, the distributed power generation technology with new energy relates to the maximum power point tracking technology, the power quality control technology, the islanding detection technology and the construction technology of related protective systems, etc. Deep research on the problems above has been performed for traditional power generation systems. However, new energy, as motive power of the distributed power generation system, has the characteristics of intermittency, fluctuation, randomness, etc., and the nature of the power output by the distributed power generation system with new energy is essentially different from that of the power output by traditional power generation systems with thermal power and hydropower as motive power. Therefore, power researchers should perform technological innovation based on traditional power development and the characteristics of the new-energy distributed grid-connected power generation system.

At present, major new energy for the distributed power generation system includes wind energy and solar energy because wind energy and solar energy are abundant, and related power generation equipment, namely wind generators and photovoltaic panels, is quite mature. However, the current technology is mainly used for wind power generation systems and solar power generation systems of large capacity, the technology on wind-solar distributed grid-connected power generation systems is still in research, and poor quality, large power fluctuation and unstable power frequency of inverter power are main factors which prevent the development of wind-solar distributed grid-connected power generation systems.

### Summary

In terms of the disadvantages of the prior art, the present invention provides a distributed hybrid powered smart grid system to improve the efficiency of energy utilization, the quality of inverter power and the stability of system operation.

The present invention relates to a distributed hybrid powered smart grid system, comprising: a power generation unit, a DC convergence unit, a power storage unit, an inverter unit, a grid-connected control unit and local AC and DC loads; the power storage unit comprises a battery power storage device.

The battery power storage device includes three layers, wherein the first layer contains at least two battery packs, headed by one of the battery packs, and other battery packs are arranged horizontally; the battery packs are connected as follows:
(1) The anode input terminal of the head battery pack is connected with the anode output terminal of the end battery pack, the cathode input terminal of the head battery pack is connected with the cathode output terminal of the end battery pack, and a switch is arranged on the connecting wire of the two battery packs.
(2) The battery packs between the head battery pack and the end battery pack are connected as follows: the anode output terminal of the forward battery pack is connected with the anode input terminal of the next battery pack, the cathode output terminal of the forward battery pack is connected with the cathode input terminal of the next battery pack, and a switch is arranged on the connecting wire of the two battery packs.

The second layer contains at least two battery packs, and the number of battery packs in the second layer is the same as that of in the first layer; one of the battery packs is considered as the head battery pack, and other battery packs are arranged horizontally, and are vertically aligned with the battery packs in the first layer; the battery packs are connected with each other as follows:
(3) The cathode input terminal of the head battery pack is connected with the cathode of the power supply, and a switch is arranged on the connecting wire of the head battery pack and the power supply; the anode input terminal of the end battery pack is connected with the anode of the power supply, and a switch is arranged on the connecting wire of the end battery pack and the power supply.
(4) If the number of the battery packs between the head battery pack and the end battery pack is odd, cathode input terminals of the battery packs are connected with the cathode of the power supply, and a switch is arranged on the connecting wire of the battery packs and the power supply; if the number of the battery packs between the head battery pack and the end battery pack is even, anode input terminals of the battery packs are connected with the anode of the power supply, and a switch is arranged on the connecting wire of the battery packs and the power supply.

All the battery packs in the second layer are connected as follows: the anode output terminal of a battery pack is connected with the anode input terminal of the vertically aligned battery pack in the first layer, the cathode output terminal of the battery pack is connected with the cathode input terminal of the vertically aligned battery pack in the first layer, and a switch is arranged on the connecting wire of the battery packs in the first layer and the second layer.

The third layer contains at least one battery pack which is connected as follows:
(5) The cathode input terminal of the battery pack is connected with the cathode of the power supply, and the anode input terminal of the battery pack is connected with the anode of the power supply.
(6) The anode input terminal of the battery pack in the third layer is respectively connected with anode input terminals of the battery packs in the second layer, a master switch is arranged on the connecting wire of the main circuit, and a sub-switch is arranged on each of the branch circuits; the cathode input terminal of the battery pack in the third layer is respectively connected with cathode input terminals of the battery packs in the second layer, and a master switch is arranged on the connecting wire of the main circuit.

The anode output terminal of the battery pack in the third layer is respectively connected with anode input terminals of the battery packs in the second layer, and switches are arranged on the connecting wires; the cathode output terminal of the battery pack in the third layer is respectively connected with cathode input terminals of the battery packs in the second layer.

A control method of the distributed hybrid powered smart grid system, comprising: a battery charging control method, an overcurrent, overvoltage and overfrequency/underfrequency protection method and a black start method.

The battery charging control method comprises the following steps of:
Step 1-1: Collecting voltage information of the battery power storage device with the voltage transformer.
Step 1-2: Converting the collected voltage information to electrical signals through the signal modulation circuit, transmitting the electrical signals to the A/D converter of DSP for A/D conversion, recording the voltage at each sampling terminal, and storing the voltage in the data memory.
Step 1-3: Transmitting the A/D converted voltage to the single-chip microcomputer by DSP.
Step 1-4: Comparing the voltage at the sampling terminal with the voltage of 13.6V, and using the constant charge method to charge the battery packs if the voltage at the sampling terminal is higher than 13.6V and performing step 1-5, or using the floating charge method to charge the battery packs if the voltage at the sampling terminal is lower than 13.6V and performing step 1-6.
Step 1-5: Charging the battery packs in the constant charge method, comprising the following steps of: using the two vertically aligned battery packs in the first layer and the second layer as a charging unit, and connecting the charging unit to be charged to the power supply for constant voltage charge, with other charging units not connected to the power supply.
Step 1-6: Using the floating charge method to charge the battery packs, comprising the following steps of: using two vertically aligned battery packs in the first layer and the second layer and the battery pack in the third layer as a charging unit, connecting the charging unit to be charged to the power supply for floating charge, with other charging units not connected to the power supply.
Step 1-7: End.

The overcurrent, overvoltage and overfrequency/underfrequency protection method comprises the following steps of:
Step 2-1: Inputting setting values of the protective system, including overcurrent setting range, overcurrent delay and stepping, overvoltage setting range, overvoltage delay and stepping, overfrequency/underfrequency setting range, and overfrequency/underfrequency delay and setting level difference.
Step 2-2: Acquiring voltage and current signals with the voltage transformer and the current transformer in the system.
Step 2-3: Transmitting the signals acquired by the transformers to the signal modulation circuit to convert to electrical signals that can be received by DSP.
Step 2-4: Transmitting voltage signals of a phase from the output terminal of the inverter to the zero-cross detecting circuit for synchronizing signals to convert voltage sine waves to square signals.
Step 2-5: Transmitting the converted signals to the A/D converter of DSP for A/D conversion, wherein the square signals of the phase are transmitted to the counting unit of DSP, the frequency of inverter power is measured, and converted and measured data is stored in the data memory.
Step 2-6: Displaying the sampled voltage signals, the current signals and the frequency signals for operation of the system on an LCD by DSP.
Step 2-7: Transmitting the data stored in DSP to the single-chip microcomputer through the serial port.
Step 2-8: Performing overcurrent protection, overvoltage protection and overfrequency/underfrequency protection. The overcurrent protection comprises the following steps of: processing the data received by connecting to the single-chip microcomputer, and determining whether the collected data is within the overcurrent setting range; if so, the signals from the single-chip microcomputer are applied to relays after passing through the photocoupler to control the circuit breaker to be opened to complete relay protection; if not, step 2-9 is performed.

An overvoltage protection comprises the following steps of: processing the data received by connecting to the single-chip microcomputer, and determining whether the collected data is within the overvoltage setting range; if so, the signals from the single-chip microcomputer are applied to the relays after passing through the photocoupler to control the circuit breaker to be opened to complete relay protection; if not, step 2-9 is performed.

An overfrequency/underfrequency protection comprises the following steps of: processing the new sample data by the single-chip microcomputer after one sampling period, and determining whether the collected data is within the overfrequency/underfrequency setting range; if so, the single-chip microcomputer sends PWM waves to control the power storage unit controller so that the flywheel power storage device is connected to the system for discharge, and the frequency of the grid-connecting power is adjusted; if not, step 2-9 is performed.

Processing the new sample data by the single-chip microcomputer after one another sampling period, and determining whether the collected data is within the overfrequency/underfrequency setting range; if not, step 2-9 is performed; if so, the signals from the single-chip microcomputer are applied to the relays after passing through the photocoupler to control the circuit breaker to be opened to complete relay protection.

Step 2-9: Transmitting the state of each relay to DSP through the serial port by the single-chip microcomputer.

Step 2-10: Determining whether the state of each relay changes; if not, step 2-11 is performed; if so, step 2-12 is performed.

Step 2-11: Displaying state parameters of the relays on the LCD.

Step 2-12: Performing remote communication with the host computer by DSP through the communication module, and informing the scheduling personnel of fault conditions and fault condition parameters of the system.

### Step 2-13: End.

A black start method comprises the following steps of:
Step 3-1: Determining the black start power supply of the system: when wind speed is higher than 5 m/s, wind generators in the power generation unit are selected as the black start power supply; when the luminance is greater than 200 lux, photovoltaic panels in the power generation unit are selected as the black start power supply; if none of the above conditions are satisfied, black start cannot be performed.
Step 3-2: Supplying power by the black start power supply to DSP and the single-chip microcomputer of the main control unit.
Step 3-3: Determining whether DSP and the single-chip microcomputer operate normally; if so, step 3-4 is performed; if not, step 3-12 is performed.
Step 3-4: Starting the DC convergence unit and the power storage unit, and then outputting power by the black start power supply to the distributed hybrid powered smart grid system.
Step 3-5: Monitoring the voltage of the black start power supply from time to time, and determining whether the voltage is out of the setting range; if so, step 3-6 is performed; if not, step 3-7 is performed.
Step 3-6: Starting the rest wind generators and photovoltaic panels, and keeping the voltage of the black start power supply within the setting range.
Step 3-7: Starting the inverter unit to invert the output DC power, and using the overcurrent, overvoltage and overfrequency/underfrequency protection method to monitor safety conditions of the system.
Step 3-8: Determining whether the system meet the safety conditions; if so, step 3-10 is performed; if not, step 3-9 are performed.
Step 3-9: Adjusting the voltage, the current and the frequencies of the inverter power at the collecting point of each transformer by controlling the power storage unit, and performing step 3-10.
Step 3-10: Supplying power to the local AC and DC loads.
Step 3-11: Starting the grid-connected control unit so that the system is connected with the grid for grid-connected power transmission, and performing step 3-13.
Step 3-12: Stopping supplying power by the black start power supply for general overhaul of the system.
Step 3-13: End.

The distributed hybrid powered smart grid system has the characteristics of high efficiency of energy utilization, good quality of inverter power and stable system operation. The system operates in a three-stage power storage mode, so the capacity for power storage is increased; the power storage mode is flexible, so the efficiency of energy utilization is improved. By controlling charge and discharge of the power storage unit, the voltage and the current at each node of the power storage unit can be balanced and fluctuate slightly above or below the rated values. In addition, if a flywheel set is used to adjust the frequency of grid-connected inverter power of the system so that power frequency fluctuation, compared with that of other grid-connected inverter power generation systems, is reduced by 10%. Switching between constant charge and floating charge of batteries is realized by reasonable arrangement of the batteries, so service life of the batteries is extended by 20%. Capabilities of fault recovery and fault detection of the system are enhanced by control of the protective system, and service life of the system is 1000 h longer than that of systems without the protective system. Black start control of the system can enable the system to successfully and safely recover operation after the system completely shuts down, so recovery capability of the system is further improved, and impact to system loads and the grid due to overvoltage and overcurrent during system start is reduced.

### Description of Figures

Figure 1 is the structural diagram for the distributed hybrid powered smart grid system in the present invention.
Figure 2 is the schematic diagram for the filter circuit in the present invention.
Figure 3 is the schematic diagram for the amplifying circuit in the present invention.
Figure 4 is the schematic diagram for the zero-cross detecting circuit in the present invention.
Figure 5 is the structural diagram for the tripping circuit in the present invention.
Figure 6 is the schematic circuit diagram for the data memory in the present invention.
Figure 7 is the schematic circuit diagram for LCD in the present invention.
Figure 8 is the schematic circuit diagram for the communication module in the present invention.
Figure 9 is the schematic circuit diagram for the battery power storage device in the present invention.

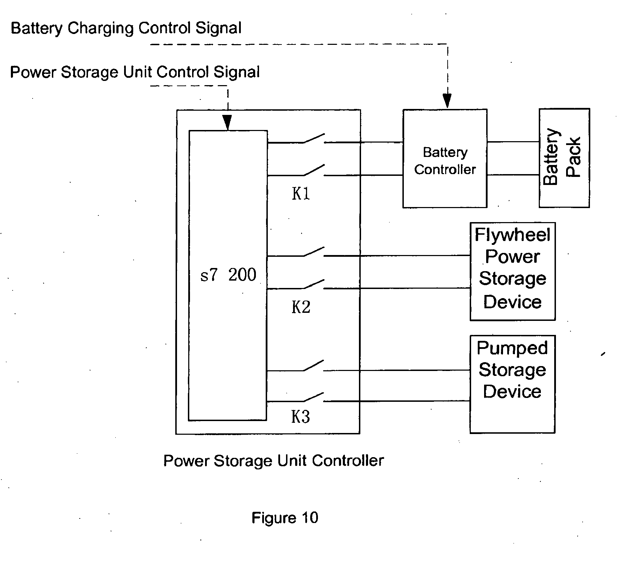

Figure 10 is the structural diagram for the power storage unit controller in the present invention.
Figure 11 is the flow chart for the battery charging control method in the present invention.
Figure 12 is the flow chart for the constant charge method in the present invention.
Figure 13 is the flow chart for the floating charge method in the present invention.
Figure 14 is the flow chart for the overcurrent, overvoltage and overfrequency/underfrequency protection method in the present invention.
Figure 15 is the flow chart for the overcurrent protection method in the present invention.
Figure 16 is the flow chart for the overvoltage protection method in the present invention.
Figure 17 is the flow chart for the overfrequency/underfrequency protection method in the present invention.
Figure 18 is the flow chart for the black start method in the present invention.

### Detailed Description

The present invention is further described by figures and the embodiment as follows:

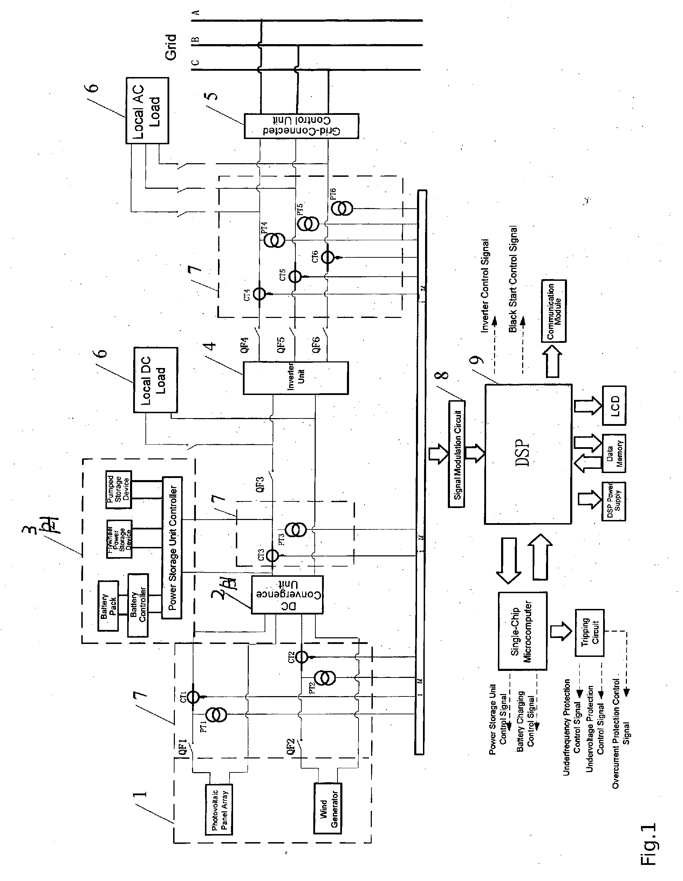

In the embodiment, the structural diagram for a distributed hybrid powered smart grid system is shown in Figure 1. The distributed hybrid powered smart grid system comprises:
(1) Power generation unit, consisting of wind generators (such as installed capacity of 3000 w) and a photovoltaic panel array (such as installed capacity of 3000 w), to supply power for power generation systems.
(2) DC convergence unit, used to perform voltage boosting of the DC power output by the power generation unit 1. In the embodiment, a Boost circuit structure (DC boost circuit) is used for voltage boosting, and the voltage of the boosted DC power is 24 V.
(3) Power storage unit, used to store DC power output by the DC convergence unit 2, comprising: a flywheel power storage device, a pumped storage device and a battery power storage device. The three devices enable the power storage unit to have a three-stage power storage structure, and the power storage priority for the three power storage devices are the flywheel power storage device, the pumped storage device and the battery power storage device to realize optimal efficiency of power utilization. In addition, the frequency of power output by the inverter unit 4 is adjusted by the frequency adjustment function of flywheels to improve the quality of the inverter power.
(4) Inverter unit, used to invert DC power output by the DC convergence unit 2 to AC power. The inverter unit accomplishes power inversion by an inverter. The inverter generates control pulses by the SVPWM control algorithm to control switching frequency and time of IGBT of the inverter and invert DC power output by the DC convergence unit to AC power with the power frequency of 50 Hz and the amplitude of 220 V to be supplied to local AC loads and transmitted to the grid for grid-connected power generation.
(5) Grid-connected control unit, used to detect the islanding condition and rapidly and effectively eliminate the grid-connected control unit, comprising a grid-connected controller and a voltage pre-compensation device.
(6) Local AC and DC loads, comprising:
   Local DC load, comprising DC electric equipment in the system.
   Local AC load, comprising AC electric equipment in the system.

   Besides the devices above, the embodiment also includes the protective system, comprising: a voltage and current signal acquisition unit, an overcurrent, overvoltage and overfrequency/underfrequency protection unit and a main control unit.
   Where:
(7) Voltage and current signal acquisition unit, used to acquire voltage and current signals for system operation, comprising a voltage transformer and a current transformer. The voltage and current signals are processed by the signal modulation circuit and then are converted to electrical signals of 3.3 V which can be processed by the main control unit.
(8) Overcurrent, overvoltage and overfrequency/underfrequency protection unit, used to monitor operating conditions of the system, quickly corresponds to abnormalities and incidents of the system and protect the system. In the embodiment, the relays of the tripping circuit are used to accomplish the functions above. The tripping circuit comprises a photocoupler and relays, and the relays include an overvoltage protection relay, an overcurrent protection relay and an overfrequency/underfrequency protection relay.
(9) Main control unit, used to calculate and determine the electrical signals acquired by the voltage and current signal acquisition unit 7 and send control signals to each functional unit (such as the grid-connected control unit, the power storage unit, the inverter unit, the communication unit, the data memory and the LCD). In addition, the main control unit is also used to store abnormal data of operating conditions of the system and display the data on the LCD (Abnormal data means the values of voltage, current and frequency at which the system operates in abnormal conditions, such as data in islanding conditions and data in short circuit conditions of the system.). In special cases (when the system fails), the main control unit performs remote communication with the host computer through the communication unit.

In the embodiment, the distributed hybrid powered smart grid system is constructed as follows:

In the embodiment, the type of the wind generators is SKYWING1000W, and the type of the photovoltaic cells is SN-150W-single crystal, and the type of the batteries is 24V/2-10PZS180-1400AH; the constant charge voltage is 14.8V, and the floating charge voltage is 13.6V;the 1000 W three-phase salient pole synchronous motor is selected as the motor of the pumped storage device, the type of the inverter installed on the inverter unit is FGY-880, and the type of PLC of the power storage unit controller is Siemens S7-200;the type of the DC voltage transformer is BLZ-1K, and the type of the DC current transformer is CT-PTA; the type of the three-phase AC current transformer is TR1102-2C/5A 3.53V, the type of the three-phase AC voltage transformer is TV52-100V/3.53V, and the type of the photocoupler is TLP521-1; the type of the overvoltage protection relay is DJ-131, the type of the overcurrent protection relay is DJ-122, and the overfrequency/underfrequency protection relay is S2FMR1;the type of the DSP chip used on the main control unit is TMS320F2812, and the type of the single-chip microcomputer is Atmel89C51;the type of the data memory is CY7C1041 BV, and the type of the LCD is LCM12864ZK.

### Detailed circuit connection is as follows:

In the embodiment, 3 DC current transformers (including CT1, CT2 and CT3) and 3 DC voltage transformers (including PT1, PT2 and PT3) are used to collect the DC voltage and the DC current of the system. PT1, PT2, CT1 and CT2 are arranged between the power generation unit 1 and the DC convergence unit 2 to collect the DC voltage and the DC current at the output terminal of the power generation unit 1. PT3 and CT3 are arranged between the DC convergence unit 2 and the inverter unit 4 to collect the DC voltage and the DC current at the output terminal of the DC convergence unit 2.

3 AC current transformers (including CT4, CT5 and CT6) and 3 AC voltage transformers (including PT4, PT5 and PT6) are used to collect the AC voltage and the AC current of the system. CT4, CT5, CT6, PT4, PT5 and PT6 are arranged between the inverter unit 4 and the grid-connected control unit 5 to collect the AC current and the AC voltage at the output terminal of the inverter unit 4.

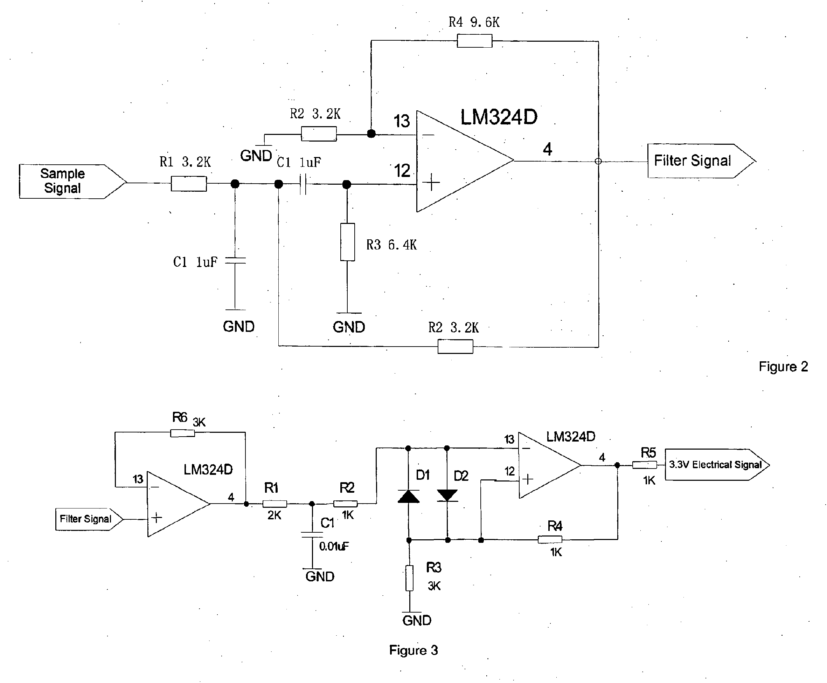

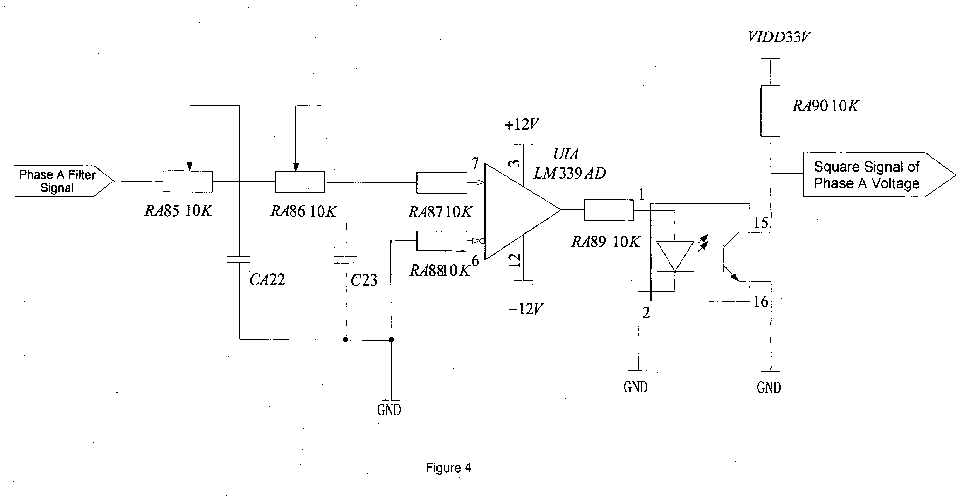

After the signals acquired by the transformers are transmitted to the signal modulation circuit for filtering and amplification, the signals are converted to electrical signals of 3.3 V. The signal modulation circuit comprises a filter circuit, an amplifying circuit and a zero-cross detecting circuit, as shown in Figure 2, Figure 3 and Figure 4. Output terminals of the transformers are connected with the sample signal terminal of the filter circuit. Filter signals (The three phases of power is of the same frequency, so only the frequency of one phase should be measured, such as phase A voltage signals) are divided into two paths: One path of the filter signals are converted to electrical signals of 3.3 V by the amplifying circuit and are transmitted to the A/D converter of DSP for A/D conversion, and the other path of the filter signals are converted to square signals by the zero-cross detecting circuit for synchronizing signals and are transmitted to the counting unit of DSP to measure the frequency of inverter power.

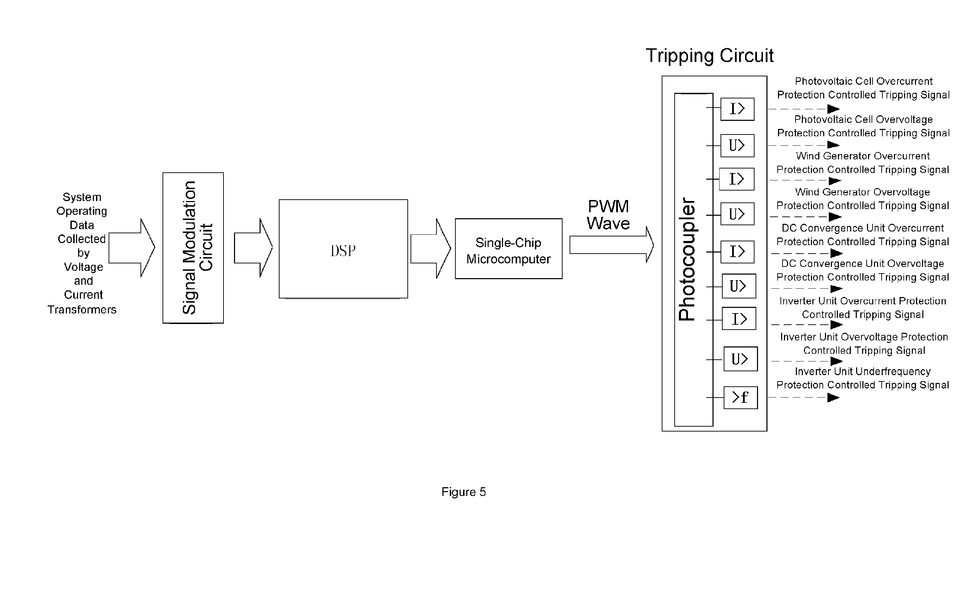

The output terminal of the signal modulation circuit is respectively connected with the ADCINA0 pin to the ADCINA7 pin and the ADCINBO pin to the ADCINA3 pin of DSP, the P3.0 pin of the single-chip microcomputer is connected with the SCITXDA pin of DSP, and the P3.1 pin of the single-chip microcomputer is connected with the SCIRXDA pin of DSP. The P1.0 pin to the P1.7 pin and the P2.0 pin of the single-chip microcomputer are respectively connected with 9 parallel photocouplers, output terminals of the photocouplers are respectively connected with the relays, and tripping signals output by the relays are respectively applied to the related circuit breaker to control the circuit breakers (QF1 to QF6), as shown in Figure 5.

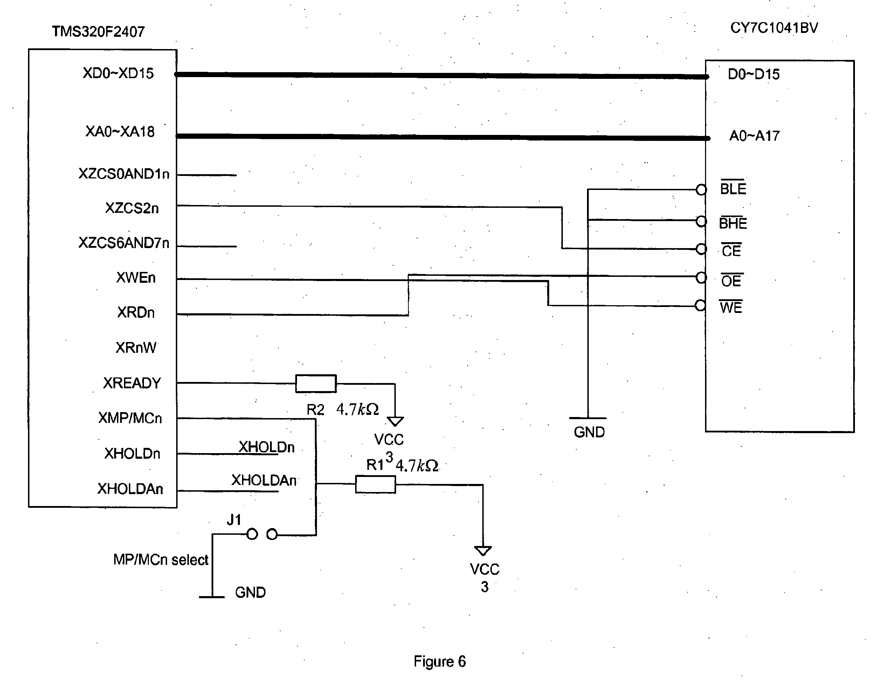

The DO pin to the D15 pin of the data memory are respectively connected with the XDO pin to the XD15 pin of DSP, the A0 pin to the A17 pin are respectively connected with the XA0 pin to the XA17 pin of DSP, as shown in Figure 6.

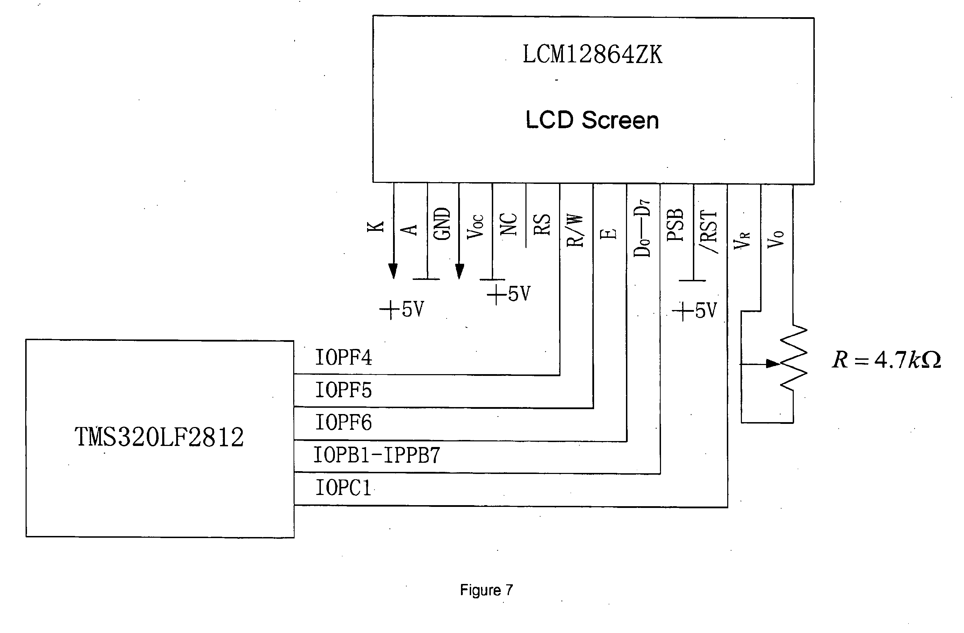

The RS pin of the LCD is connected with the IOPF4 pin of DSP, and the R/W pin of the LCD is connected with the IOPF5 pin of DSP. The E pin of the LCD is connected with the IOPF6 pin of DSP, the D0 pin to the D7 pin of the LCD are connected with the IOPB1 pin to the IOPB7 pin of DSP, and the /RST pin of the LCD is connected with the IOPC1 pin of DSP, as shown in Figure 7.

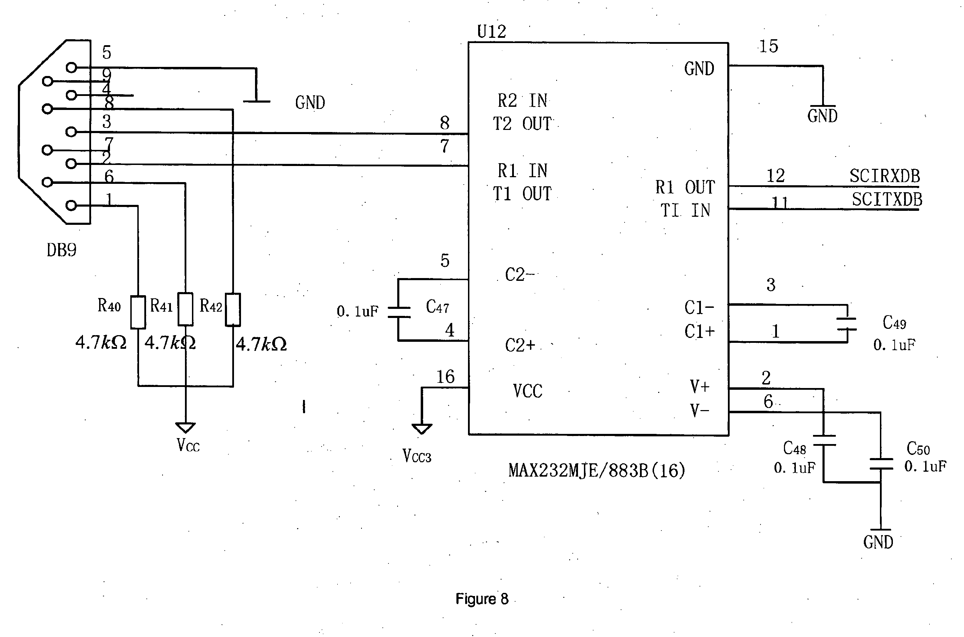

The communication unit drives the chip by MAX232, and the R10UT pin and the T1IN pin of the communication unit are respectively connected with the SCIRXDB pin and the SCITXDB pin of DSP, as shown in Figure 8.

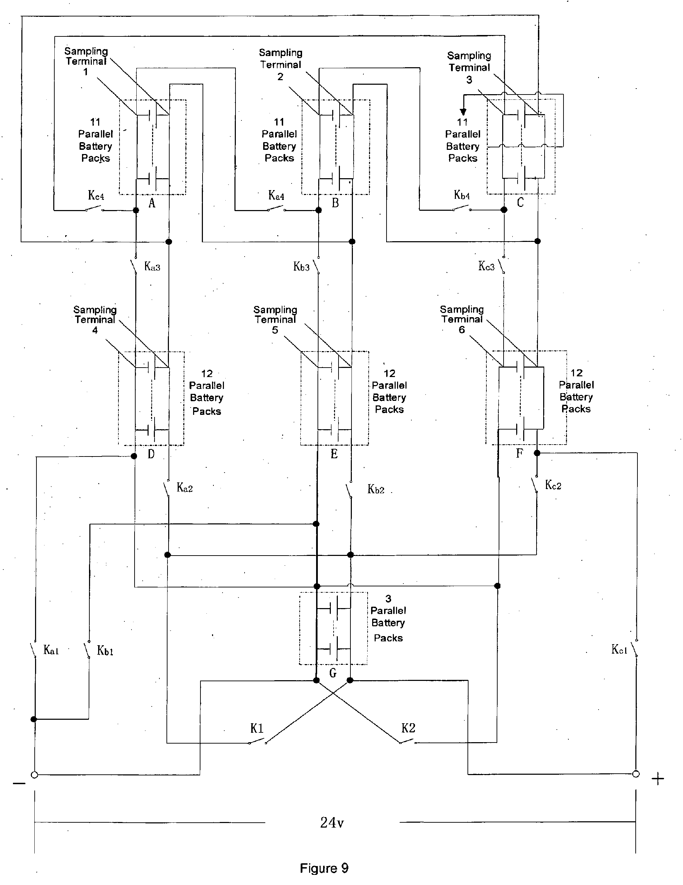

In the embodiment, the battery power storage device is shown in Figure 9. The battery power storage device comprises three layers. The first layer contains three battery packs, namely battery pack A, battery pack B and battery pack C. The battery pack A, battery pack B and battery pack C respectively contain 11 batteries connected in parallel. The three battery packs are arranged horizontally, headed by the battery pack A and ended by the battery pack C. The anode input terminal of the battery pack A is connected with the anode output terminal of the battery pack C; the cathode input terminal of the battery pack A is connected with the cathode output terminal of the battery pack C, and a switch K_{c4} is arranged on the connecting wire of the two battery packs. The anode output terminal of the battery pack A is connected with the anode input terminal of the battery pack B, the cathode output terminal of the battery pack A is connected with the cathode input terminal of the battery pack B, and a switch Kₐ₄ is arranged on the connecting wire of the two battery packs. The anode output terminal of the battery pack B is connected with the anode input terminal of the battery pack C, the cathode output terminal of the battery pack B is connected with the cathode input terminal of the battery pack C, and a switch K_{b4} is arranged on the connecting wire of the two battery packs.

The second layer also contains 3 battery packs, namely battery pack D, battery pack E and battery pack F. The battery pack D, battery pack E and battery pack F respectively contain 12 batteries connected in parallel. The three battery packs are arranged horizontally, headed by the battery pack D and ended by the battery pack F. The cathode input terminal of the battery pack D is connected with the cathode of the power supply, and a switch Kₐ₁ is arranged on the connecting wire of the battery pack D and the power supply. The cathode input terminal of the battery pack E is connected with the cathode of the power supply, and a switch K_{b1} is arranged on the connecting wire of the battery pack E and the power supply. The anode input terminal of the battery pack F is connected with the anode of the power supply, and a switch K_{c1} is arranged on the connecting wire of the battery pack F and the power supply. The anode output terminal of the battery pack D is connected with the anode input terminal of the battery pack A in the first layer, the cathode output terminal of the battery pack D is connected with the cathode input terminal of the battery pack A in the first layer, and a switch Kₐ₃ is arranged on the connecting wire of the two battery packs. The anode output terminal of the battery pack E is connected with the anode input terminal of the battery pack B in the first layer, the cathode output terminal of the battery pack E is connected with the cathode input terminal of the battery pack B in the first layer, and a switch K_{b3} is arranged on the connecting wire of the two battery packs. The anode output terminal of the battery pack F is connected with the anode input terminal of the battery pack C in the first layer, the cathode output terminal of the battery pack F is connected with the cathode input terminal of the battery pack C in the first layer, and a switch K_{c3} is arranged on the connecting wire of the two battery packs.

The third layer contains the battery pack G comprising 3 batteries connected in parallel. The anode input terminal of the battery pack G is connected with the anode of the power supply, the cathode input terminal of the battery pack G is connected with the cathode of the power supply, the cathode input terminal of the battery pack G is respectively connected with cathode input terminals of the battery packs in the second layer, and a master switch K₂ is arranged on the connecting wire of the main circuit. The anode input terminal of the battery pack G is respectively connected with anode input terminals of the battery packs in the second layer, and a master switch *K*₁ is arranged on the connecting wire of the main circuit. In addition, a switch Kₐ₂ is arranged on the connecting wire of the branch circuit of the battery pack D, a switch K_{b2} is arranged on the connecting wire of the branch circuit of the battery pack E, and a switch K_{c2} is arranged on the connecting wire of the branch circuit of the battery pack F. The cathode output terminal of the battery pack G is connected with the cathode input terminal of the battery pack D, the anode output terminal of the battery pack G is connected with the anode input terminal of the battery pack D, and a switch Kₐ₂ is arranged on the connecting wire of the two battery packs. The cathode output terminal of the battery pack G is connected with the cathode input terminal of the battery pack E, the anode output terminal of the battery pack G is connected with the anode input terminal of the battery pack E, and a switch K_{b2} is arranged on the connecting wire of the two battery packs. The cathode output terminal of the battery pack G is connected with the cathode input terminal of the battery pack F, the anode output terminal of the battery pack G is connected with the anode input terminal of the battery pack F, and a switch K_{c2} is arranged on the connecting wire of the two battery packs.

A control method of the distributed hybrid powered smart grid system, comprising: a battery charging control method, an overcurrent, overvoltage and overfrequency/underfrequency protection method and a black start method.

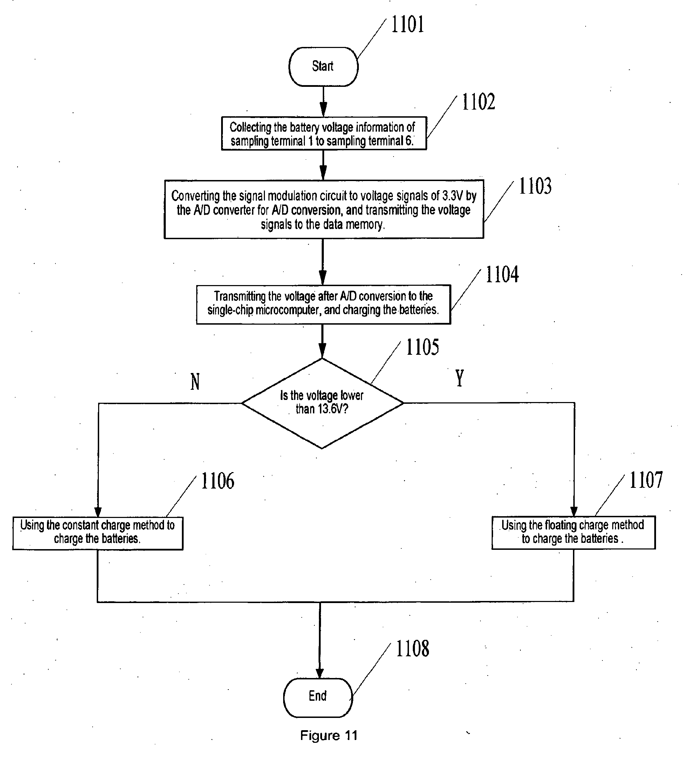

The battery charging control method is shown in Figure 11. The procedures start from step 1101. In step 1102, voltage information of the battery power storage device, namely the voltage information of the sampling terminal 1 to the sampling terminal 6 in Figure 9, is collected by the voltage transformer.

In step 1103, the collected voltage information is converted to electrical signals of 3.3 V by the signal modulation circuit, and the electrical signals are transmitted to the A/D converter of DSP for A/D conversion. Then, the voltage at each sampling terminal is recorded and is stored in the data memory.

In step 1104, the voltage after A/D conversion is transmitted to the single-chip microcomputer by DSP.

In step 1105, the voltage at the sampling terminal is compared with 13.6 V. If the voltage at the sampling terminal is higher than 13.6 V, the constant voltage method is used to charge the battery packs, and then, step 1106 is performed. If the voltage at the sampling terminal is lower than 13.6V, the floating charge method is used to charge the battery packs, and then, step 1107 is performed.

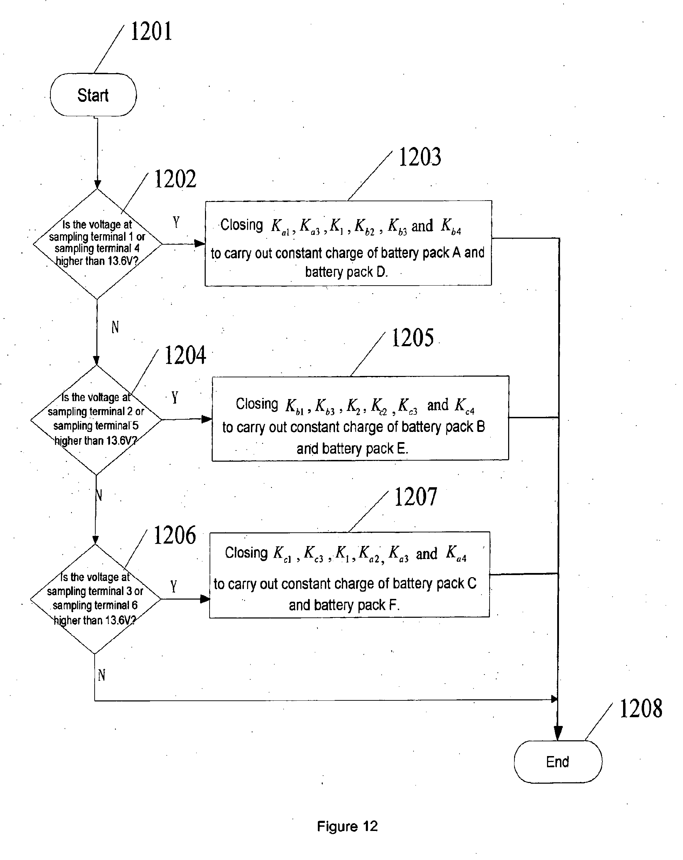

In step 1106, the constant voltage method is used to charge the battery packs, as shown in Figure 12. The procedures start from step 1201. In step 1202, the voltage at the sampling terminal 1 or the sampling terminal 4 is compared with 13.6 V. If the voltage is higher than 13.6V, the single-chip microcomputer sends PWM waves to drive the battery pack controller, and then, step 1203 is performed. If the voltage is lower than 13.6 V, step 1204 is performed.

In step 1203, PLC in the battery pack controller sends signals to make the switches *K*_{*a*1}, *K*_{*a*3}, *K*₁, *K*_{*b*2}, *K*_{*b*3} and *K*_{*b*4} closed and other switches open to carry out constant charge of the battery pack A and the battery pack D, and then, step 1208 is performed.

In step 1204, the voltage at the sampling terminal 2 or the sampling terminal 5 is compared with 13.6 V. If the voltage is higher than 13.6 V, the single-chip microcomputer sends PWM waves to drive the battery pack controller, and then, step 1205 is performed. If the voltage is lower than 13.6 V, step 1206 is performed.

In step 1205, PLC in the battery pack controller sends signals to make switches *K*_{*b*1}, *K*_{*b*3}, *K₂*, *K*_{*c*2}, *K*_{*c*3} and *K*_{*c*4} closed and other switches open to carry out constant charge of the battery pack B and the battery pack E, and then, step 1208 is performed.

In step 1206, the voltage at the sampling terminal 3 or the sampling terminal 6 is compared with 13.6 V. If the voltage is higher than 13.6 V, the single-chip microcomputer sends PWM waves to drive the battery pack controller, and then, step 1207 is performed. If the voltage is lower than 13.6 V, step 1208 is performed.

In step 1207, PLC in the battery pack controller sends signals to make switches *K*_{*c*1}, *K*_{*c*3}, *K*₁, *K*_{*a*2}, *Kₐ₃* and *Kₐ₄* closed and other switches open to carry out constant charge of the battery pack C and the battery pack F.

In step 1208, constant charge stops.

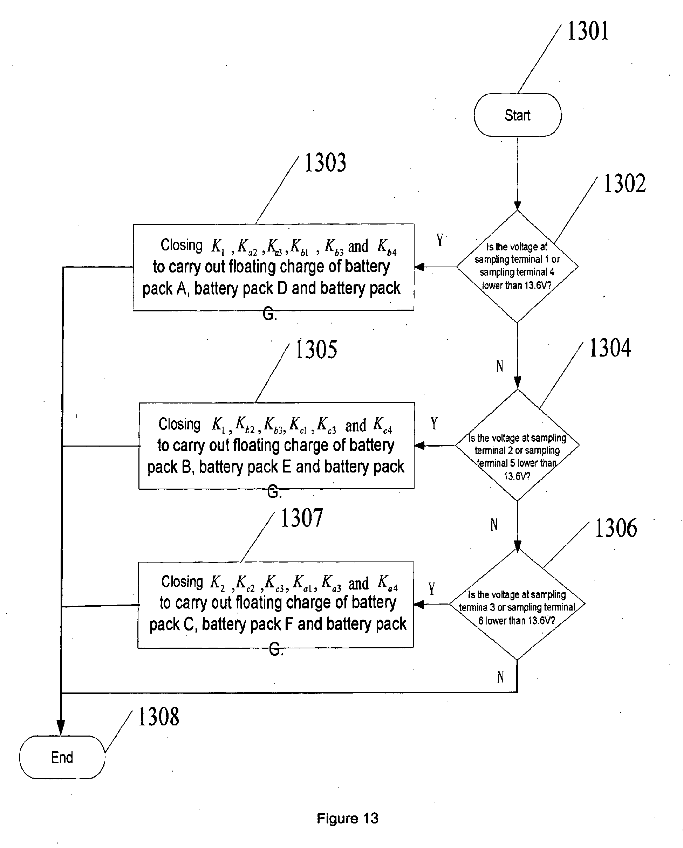

In step 1107, the floating charge method is used to charge the battery packs, as shown in Figure 13. The procedures start from step 1301. In step 1302, the voltage at the sampling terminal 1 or the sampling terminal 4 is compared with 13.6 V. If the voltage is lower than 13.6 V, the single-chip microcomputer sends PWM waves to drive the battery pack controller, and then, step 1303 is performed. If the voltage is higher than 13.6 V, step 1304 is performed.

In step 1303, PLC in the battery pack controller sends signals to make switches *K*₁, *K*_{*a*2}, *K*_{*a*3}, *K*_{*b*1}, *K*_{*b*3} and *K*_{*b*4} closed and other switches open to carry out floating charge of the battery pack A, the battery pack D and the battery pack G, and then, step 1308 is performed.

In step 1304, the voltage at the sampling terminal 2 or the sampling terminal 5 is compared with 13.6V. If the voltage is lower than 13.6V, the single-chip microcomputer sends PWM waves to drive the battery pack controller, and then, step 1305 is performed. If the voltage is higher than 13.6 V, step 1306 is performed.

In step 1305, PLC in the battery pack controller sends signals to make switches *K*₁, *K*_{*b*2}, *K*_{*b*3}, *K*_{*c*1}, *K*_{*c*3} and *K*_{*c*4} closed and other switches open to carry out floating charge of the battery pack B, the battery pack E and the battery pack G, and then, step 1308 is performed.

In step 1306, the voltage at the sampling terminal 3 or the sampling terminal 6 is compared with 13.6 V. If the voltage is lower than 13.6 V, the single-chip microcomputer sends PWM waves to drive the battery pack controller, and then, step 1307 is performed. If the voltage is higher than 13.6 V, step 1308 is performed.

In step 1307, the single-chip microcomputer sends PWM waves to drive the battery pack controller. PLC in the battery pack controller sends signals to make switches *K*₂, *K*_{*c*2}, *K*_{*c*3}, *K*_{*a*1}, *K*_{*a*3} and *K*_{*a*4} closed and other switches open to carry out floating charge of the battery pack C, the battery pack F and the battery pack G.

In step 1308, floating charge stops.

In step 1108, the battery charging control method ends.

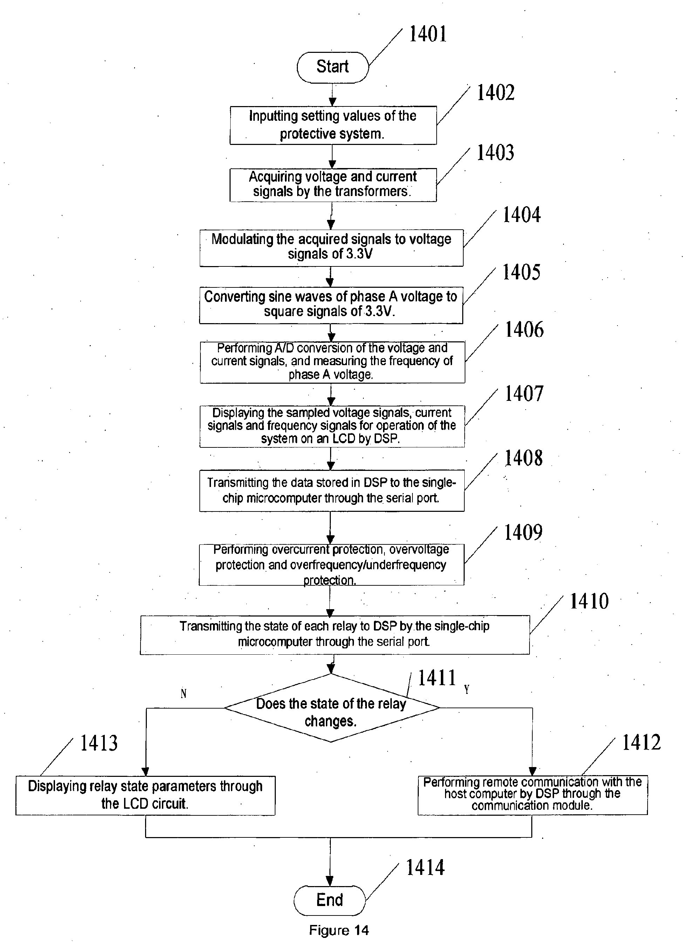

The procedures of the overcurrent, overvoltage and overfrequency/underfrequency protection method are shown in Figure 14. The procedures start from step 1401. In step 1402, setting values of the protective system are input, in which the setting range of overcurrent is 0 to 50 A, the setting range of overcurrent delay is 0.1 to 20 s, and the stepping is 0.1 s; the setting range of overvoltage is 0 to 200 V, the setting range of undervoltage delay is 0.1 to 20 s, and the stepping is 0.1s; the setting range of the overfrequency/underfrequency is 39.1 to 49.5 Hz, the setting range of overfrequency/underfrequency delay is 0 to 99.9 s, and the setting level difference is 0.1s.

In step 1403, voltage and current signals are acquired by the voltage transformer and the current transformer in the system.

In step 1404, the signals acquired by the transformers are transmitted to the signal modulation circuit and are converted to electrical signals of 3.3 V.

In step 1405, voltage signals (phase A, phase B or phase C) at the output terminal of the inverter are transmitted to the zero-cross detecting circuit for synchronizing signals, and voltage sine waves (phase A, phase B or phase C) are converted to square signals of 3.3 V.

In step 1406, the converted signals are transmitted to the A/D converter of DSP for A/D conversion. The square signals of the phase A voltage, phase B voltage or phase C voltage are transmitted to the counting unit of DSP, the frequency of inverter power is measured, and the converted and measured data is stored in the data memory.

In step 1407, the sampled voltage signals, the current signals and the frequency signals for operation of the system are displayed on an LCD by DSP.

In step 1408, the data stored in DSP is transmitted to the single-chip microcomputer through the serial port.

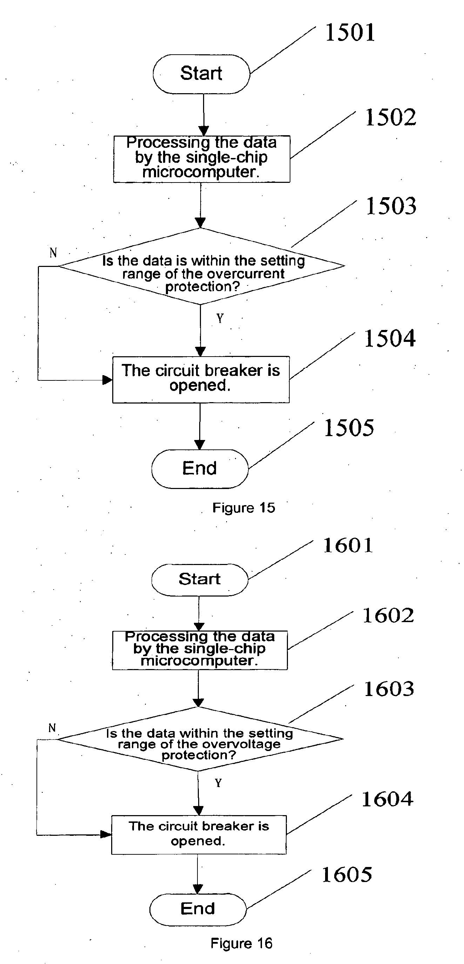

In step 1409, overcurrent protection, overvoltage protection and overfrequency/underfrequency protection are performed. The procedures of the overcurrent protection are shown in Figure 15. The procedures start from step 1501. In step 1502, the received data is processed by the single-chip microcomputer.

In step 1503, the collected data is compared with the setting range of overcurrent protection. If the data is within the setting range, step 1504 is performed. If the data is not within the setting range, step 1505 is performed.

In step 1504, the signals from the single-chip microcomputer are applied to the relays after passing through the photocoupler to control the circuit breaker to be opened to complete relay protection.

In step 1505, the procedures end.

The procedures of the overvoltage protection are shown in Figure 16. The procedures start from step 1601. In step 1602, the received data is processed by the single-chip microcomputer.

In step 1603, the collected data is compared with the setting range of overvoltage protection. If the data is within the setting range, step 1604 is performed. If the data is not within the setting range, step 1605 is performed.

In step 1604, the signals from the single-chip microcomputer are applied to the relays after passing through the photocoupler to control the circuit breaker to be opened to complete relay protection.

In step 1605, the procedures end.

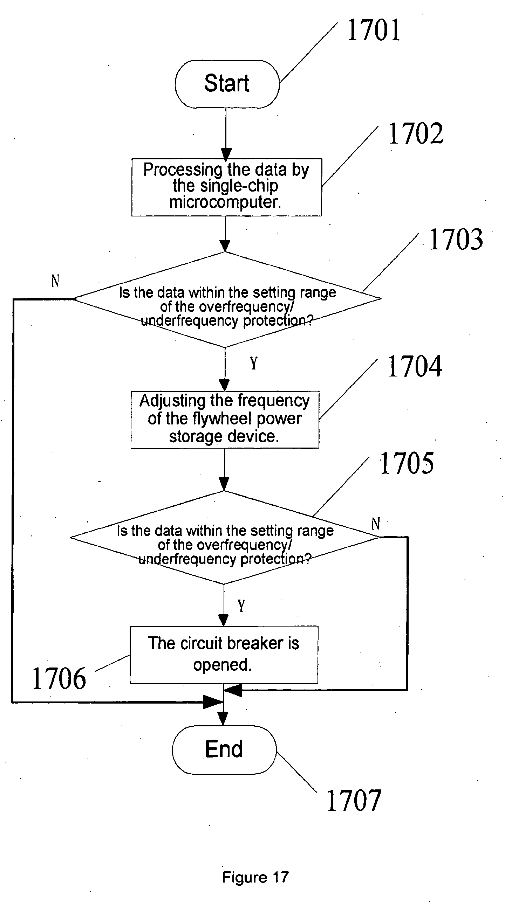

The procedures of the overfrequency/underfrequency protection are shown in Figure 17. The procedures start from step 1701. In step 1702, after one sampling period, the new sampled data is processed by the single-chip microcomputer.

In step 1703, the collected data is compared with the setting range of overfrequency/underfrequency protection. If the data is within the setting range, step 1704 is performed. If the data is not within the setting range, step 1707 is performed.

In step 1704, the single-chip microcomputer sends PWM waves to control the power storage unit controller so that the flywheel power storage device is connected to the system for discharge, and the frequency of the grid-connected power is adjusted.

In step 1705, after one sampling period, the new sample data is processed by the single-chip microcomputer, and the collected data is compared with the setting range of overfroquency/underfrequency. If the data is not within the setting range, step 1707 is performed. If the data is within the setting range, step 1706 is performed.

In step 1706, the signals from the single-chip microcomputer processing data are applied to the relays after passing through the photocoupler to control the circuit breaker to be opened to complete relay protection.

In step 1707, the procedures end.

In step 1410, the state of each relay is transmitted to DSP by the single-chip microcomputer through the serial port.

In step 1411, the state of the relays is checked for changes. If the state does not change, step 1413 is performed. If the state changes, step 1412 is performed.

In step 1412, remote communication is performed with the host computer by DSP through the communication module, and the scheduling personnel is informed of fault conditions and fault condition parameters of the system.

In step 1413, state parameters of the relays are displayed through the LCD circuit.

In step 1414, the overcurrent, overvoltage and overfrequency/underfrequency protection method ends.

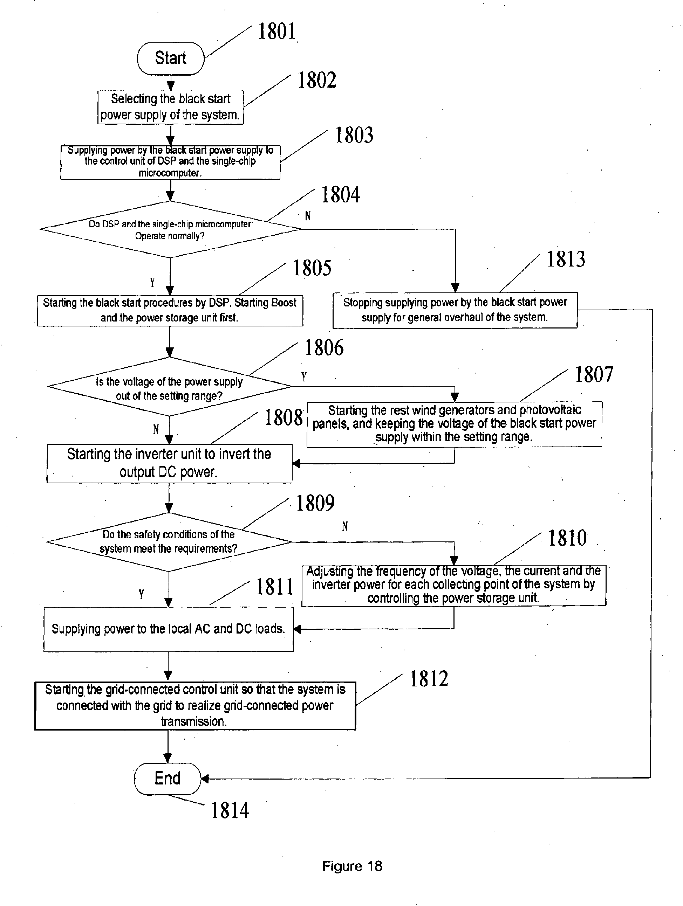

In the embodiment, the procedures of the black start method are shown in Figure 18. The procedures start from step 1801. In step 1802, the black start power supply is determined. When the wind speed is more than 5 m/s, wind generators (such as 500 W) in the power generation unit (1) are selected as the black start power supply. When the luminance is greater than 200 lux, photovoltaic panels (such as 1000 W) in the power generation unit are selected as the black start power supply. If neither of the above conditions are satisfied, black start cannot be performed.

In step 1803, the black start power supply supplies power to the main control unit (9) of DSP and the single-chip microcomputer.

In step 1804, DSP and the single-chip microcomputer are checked for operating conditions. If the operating conditions are normal, step 1805 is performed. If the operating conditions are not normal, step 1813 is performed.

In step 1805, Boost and the power storage unit are started, and then, the black start power supply supplies power to the distributed hybrid powered smart grid system.

In step 1806, the voltage of the black start power supply is monitored from time to time. The voltage is compared with the setting range. If the voltage is out of the setting range, step 1807 is performed. If the voltage is within the setting range, step 1808 is performed.

In step 1807, the rest wind generators and photovoltaic panels are started, and the voltage of the black start power supply is kept within the setting range.

In step 1808, the inverter unit is started to invert the output DC power, and the overcurrent, undervoltage and underfrequency protection method is used to monitor safety conditions of the system.

In step 1809, the system is checked for safety conditions. If the safety conditions meet the requirements, step 1811 is performed. If the safety conditions do not meet the requirements, step 1810 is performed.

In step 1810, the voltage and the current at each collecting point of the transformers (CT1 to CT6 and PT1 to PT6) and the frequency of the inverter power are adjusted by controlling the power storage unit, and then, step 1811 is performed.

In step 1811, power is supplied to the local AC and DC loads.

In step 1812, the grid-connected control unit is started so that the distributed hybrid powered smart grid system is connected with the grid to realize grid-connected power transmission, and then, step 1814 is performed.

In step 1813, the black start power supply stops supplying power to the distributed hybrid powered smart grid system for general overhaul.

In step 1814, the black start control method ends.

Although the embodiment in the present invention is described above, skilled technicians in the technical field should know that these are only examples, and the embodiment can be changed or modified by the technicians in the technical field without changing the principle and the nature of the present invention. The scope of the present invention is only limited by the attached claims.

## Claims

1. A distributed hybrid powered smart grid system, comprising: a power generation unit (1), a DC convergence unit (2), a power storage unit (3), an inverter unit (4), a grid-connected control (5) unit and local AC and DC loads (6); said power storage unit comprises a battery power storage device
**characterized in that** said battery power storage device includes three layers, wherein the first layer contains at least two battery packs (A, B, C), headed by one of the battery packs (A), and other battery packs are arranged horizontally; the battery packs are connected as follows:
(1) The anode input terminal of the head battery pack (A) is connected with the anode output terminal of the end battery pack (C), the cathode input terminal of the head battery pack (A) is connected with the cathode output terminal of the end battery pack (C), and a switch (Kc4) is arranged on the connecting wire of the two battery packs;
(2) The battery packs between the head battery pack (A) and the end battery pack (C) are connected as follows: the anode output terminal of the forward battery pack is connected with the anode input terminal of the next battery pack, the cathode output terminal of the forward battery pack is connected with the cathode input terminal of the next battery pack, and a switch (Ka4, Kb4) is arranged on the connecting wire of the two battery packs;
The second layer contains at least two battery packs (D, E, F), and the number of battery packs in the second layer is the same as that of in the first layer; one of the battery packs is considered as the head battery pack (D), and other battery packs are arranged horizontally, and are vertically aligned with the battery packs in the first layer; the battery packs are connected as follows:
(3) The cathode input terminal of the head battery pack (D) is connected with the cathode of the power supply, and a switch (Ka1) is arranged on the connecting wire of the head battery pack (D) and the power supply; the anode input terminal of the end battery pack (F) is connected with the anode of the power supply, and a switch (Kc1) is arranged on the connecting wire of the end battery pack (F) and the power supply;
(4) If the number of the battery packs between the head battery pack (D) and the end battery pack (F) is odd, cathode input terminals of the battery packs are connected with the cathode of the power supply, and a switch (Kb1) is arranged on the connecting wire of the battery packs and the power supply; if the number of the battery packs between the head battery pack (D) and the end battery pack (F) is even, anode input terminals of the battery packs are connected with the anode of the power supply, and a switch is arranged on the connecting wire of the battery packs and the power supply;
All the battery packs (D, E, F) in the second layer are connected as follows: the anode output terminal of a battery pack is connected with the anode input terminal of the vertically aligned battery pack in the first layer, the cathode output terminal of the battery pack is connected with the cathode input terminal of the vertically aligned battery pack in the first layer, and a switch (Ka3, Kb3, Kc3) is arranged on the connecting wire of the battery packs in the first layer and the second layer;
The third layer contains at least one battery pack (G) which is connected as follows:
(5) The cathode input terminal of the at least one battery pack (G) is connected with the cathode of the power supply, and the anode input terminal of the battery pack (G) is connected with the anode of the power supply;
(6) The anode input terminal of the at least one battery pack (G) in the third layer is respectively connected with anode input terminals of the battery packs (D, E, F) in the second layer, a master switch (K1) is arranged on the connecting wire of the main circuit, and a sub-switch (Ka2, Kb2, Kc2) is arranged on each of the branch circuits; the cathode input terminal of the at least one battery pack (G) in the third layer is respectively connected with cathode input terminals of the battery packs (D, E, F) in the second layer, and a master switch (K2) is arranged on the connecting wire of the main circuit;
The anode output terminal of the at least one battery pack (G) in the third layer is respectively connected with anode input terminals of the battery packs in the second layer, and switches (Ka2, Kb2, Kc2) are arranged on the connecting wires; the cathode output terminal of the at least one battery pack (G) in the third layer is respectively connected with cathode input terminals of the battery packs (D, E, F) in the second layer.

## Patentansprüche

1. Verteiltes hybrid betriebenes intelligentes Netzsystem, umfassend: eine Stromerzeugungseinheit (1), eine Gleichstrom-Konvergenzeinheit (2), eine Stromspeichereinheit (3), eine Wechselrichtereinheit (4), eine Netz-verbundene Steuereinheit (5) und lokale Wechselstrom- und Gleichstromlasten (6); wobei die Stromspeichereinheit eine Batteriestromspeicher-vorrichtung umfasst,
**dadurch gekennzeichnet, dass** die Batteriestromspeichervorrichtung drei Schichten umfasst, wobei die erste Schicht mindestens zwei Batteriepacks (A, B, C) umfasst, angeführt von einem der Batteriepacks (A), und weitere Batteriepacks horizontal angeordnet sind; wobei die Batteriepacks sind wie folgt miteinander verbunden sind:
(1) die Anoden-Eingangsklemme des ersten Batterienpacks (A) ist mit der Anoden-Ausgangsklemme des End-Batterienpacks (C) verbunden, die Kathoden-Eingangsklemme des ersten Batterienpacks (A) ist mit der Kathoden-Ausgangsklemme den End-Batterienpacks (C) verbunden, und ein Schalter (Kc4) ist auf dem Verbindungsdraht der zwei Batterienpacks angeordnet;
(2) Die Batterienpacks zwischen dem ersten Batterienpack (A) und dem End-Batteriepack(C) sind wie folgt verbunden: die Anoden-Ausgangsklemme des vorderen Batteriepacks ist mit der Anoden-Eingangsklemme des nächsten Batterienpacks verbunden, die Kathoden-Ausgangsklemme des vorderen Batteriepacks ist mit der Kathoden-Eingangsklemme des nächsten Batterienpacks verbunden, und ein Schalter (Ka4, Kb4) ist auf dem Verbindungsdraht der zwei Batterienpacks angeordnet;
die zweite Schicht enthält mindestens zwei Batterienpacks (D, E, F), und die Anzahl von Batterienpacks in der zweiten Schicht ist die gleiche wie diejenige in der ersten Schicht; eines der Batterienpacks wird als das erste Batterienpack (D) erachtet, und weitere Batterienpacks sind horizontal angeordnet und sind vertikal mit den Batterienpacks in der ersten Schicht ausgefluchtet; die Batterienpacks sind wie folgt verbunden:
(3) die Kathoden-Eingangsklemme des ersten Batterienpacks (D) ist mit der Kathode der Stromversorgung verbunden, und ein Schalter (Ka1) ist auf dem Verbindungsdraht des ersten Batterienpacks (D) und der Stromversorgung angeordnet; die Anoden-Eingangsklemme des End-Batterienpacks (F) ist mit der Anode der Stromversorgung verbunden, und ein Schalter (Kc1) ist auf dem Verbindungsdraht des End-Batterienpacks (F) und der Stromversorgung angeordnet;
(4) wenn die Anzahl der Batterienpacks zwischen dem ersten Batterienpack (D) und dem End-Batterienpack (F) ungerade ist, sind die Kathoden-Eingangsklemmen des Batterienpacks mit der Kathode der Stromversorgung verbunden, und ein Schalter (Kb4) ist auf dem Verbindungsdraht des Batterienpacks und der Stromversorgung angeordnet; wenn die Anzahl der Batterienpacks zwischen dem ersten Batterienpack (D) und dem End-Batterienpack (F) gerade ist, werden Anoden-Eingangsklemmen der Batterienpacks mit der Anode der Stromversorgung verbunden, und ein Schalter wird auf dem Verbindungsdraht des Batterienpacks und der Stromversorgung angeordnet;
alle Batterienpacks (D, E, F) in der zweiten Schicht werden wie folgt verbunden: die Anoden-Ausgangsklemme eines Batterienpacks ist mit der Anoden-Eingangsklemme des vertikal ausgefluchteten Batterienpacks in der ersten Lage verbunden, die Kathoden-Ausgangsklemme des Batterienpacks ist mit der Kathoden-Eingangsklemme des vertikal ausgefluchteten Batterienpacks in der ersten Lage verbunden, und ein Schalter (Ka3, Kb3, Kc3) ist auf dem Verbindungsdraht des Batterienpacks in der ersten Schicht und der zweiten Schicht angeordnet;
die dritte Schicht enthält mindestens ein Batterienpack (G), das wie folgt verbunden ist:
(5) die Kathoden-Eingangsklemme des mindestens einen Batterienpacks (G) ist mit der Kathode der Stromversorgung verbunden, und die Anoden-Eingangsklemme des Batterienpacks (G) ist mit der Anode der Stromversorgung verbunden;
(6) Die Kathoden-Eingangsklemme des mindestens einen Batterienpacks (G) in der dritten Schicht ist jeweils mit den Anoden-Eingangsklemmen des Batterienpacks (D, E, F) in der zweiten Schicht verbunden, ein Hauptschalter (K1) ist auf dem Verbindungsdraht der Hauptschaltung angeordnet, und eine Unterschalter (Ka2, Kb2, Kc2) ist auf jedem der Zweigschaltungen angeordnet; (6) die Kathoden-Eingangsklemme des mindestens einen Batterienpacks (G) in der dritten Schicht ist jeweils mit den Kathoden-Eingangsklemmen der Batterienpacks (D, E, F) in der zweiten Schicht verbunden, und ein Hauptschalter (K2) ist auf dem Verbindungsdraht der Hauptschaltung angeordnet;
die Anoden-Ausgangsklemme des mindestens einen Batterienpacks (G) in der dritten Schicht ist jeweils mit Anoden-Eingangsklemmen der Batterienpacks in der zweiten Schicht verbunden, und Schalter (Ka2, Kb2, Kc2) sind auf den Verbindungsdrähten angeordnet; die Kathoden-Ausgangsklemme des mindestens einen Batterienpacks (G) in der dritten Schicht ist jeweils mit den Kathoden-Eingangsklemmen des Batterienpacks (D, E, F) in der zweiten Schicht verbunden.

## Revendications

1. Système réseau intelligent alimenté hybride réparti, comprenant : une unité de production d'énergie électrique (1), une unité de convergence CC (2), une unité de stockage d'énergie électrique (3), une unité onduleur (4), une unité de commande connectée au réseau (5) et des charges CA et CC locales (6) ; ladite unité de stockage d'énergie électrique comprend un dispositif de stockage d'énergie électrique à batterie,
**caractérisé en ce que** ledit dispositif de stockage d'énergie électrique à batteries comprend trois couches, dans lequel la première couche contient au moins deux blocs de batteries (A, B, C), dirigés par un des blocs de batteries (A), et d'autre blocs de batteries sont agencés horizontalement ; les blocs de batteries sont connectés comme suit :
(1) la borne d'entrée d'anode du bloc de batteries de tête (A) est connectée avec la borne de sortie d' anode du bloc de batteries de fin (C), la borne d'entrée de cathode du bloc de batteries de tête (A) est connectée avec la borne de sortie de cathode du bloc de batteries de fin (C), et un commutateur (Kc4) est agencé sur le fil de connexion des deux blocs de batteries ;
(2) les blocs de batteries entre le bloc de batteries de tête (A) et le bloc de batteries de fin (C) sont connectés comme suit : la borne de sortie d'anode du bloc de batteries avant est connectée avec la borne d'entrée d'anode du bloc de batteries suivant, la borne de sortie de cathode du bloc de batteries avant est connectée avec la borne d'entrée de cathode du bloc de batteries suivant, et un commutateur (Ka4, Kb4) est agencé sur le fil de connexion des deux blocs de batteries ;
la deuxième couche contient au moins deux blocs de batteries (D, E, F), et le nombre de blocs de batteries dans la deuxième couche est le même que celui dans la première couche ; un des blocs de batteries est considéré comme étant le bloc de batteries de tête (D), et d'autres blocs de batteries sont agencés horizontalement, et sont verticalement alignés avec les blocs de batteries dans la première couche ; les blocs de batteries sont connectés comme suit :
(3) la borne d'entrée de cathode du bloc de batteries de tête (D) est connectée avec la cathode de l'alimentation en énergie électrique, et un commutateur (Ka1) est agencé sur le fil de connexion du bloc de batteries de tête (D) et de l'alimentation en énergie électrique ; la borne d'entrée d'anode du bloc de batteries de fin (F) est connectée avec l'anode de l'alimentation en énergie électrique, et un commutateur (Kc1) est agencé sur le fil de connexion du bloc de batteries de fin (F) et de l'alimentation en énergie électrique ;
(4) si le nombre des blocs de batteries entre le bloc de batteries de tête (D) et le bloc de batteries de fin (F) est impair, des bornes d'entrée de cathode des blocs de batteries sont connectées avec la cathode de l'alimentation en énergie électrique, et un commutateur (Kb1) est agencé sur le fil de connexion des blocs de batteries et de l'alimentation en énergie électrique ; si le nombre des blocs de batteries entre le bloc de batteries de tête (D) et le bloc de batteries de fin (F) est pair, des bornes d'entrée d'anode des blocs de batteries sont connectées avec l'anode de l'alimentation en énergie électrique, et un commutateur est agencé sur le fil de connexion des blocs de batteries et de l'alimentation en énergie électrique ;
tous les blocs de batteries (D, E, F) dans la deuxième couche sont connectés comme suit : la borne de sortie d'anode d'un bloc de batteries est connectée avec la borne d'entrée d'anode du bloc de batteries verticalement aligné dans la première couche, la borne de sortie de cathode du bloc de batteries est connectée avec la borne d'entrée de cathode du bloc de batteries verticalement aligné dans la première couche, et un commutateur (Ka3, Kb3, Kc3) est agencé sur le fil de connexion des blocs de batteries dans la première couche et la deuxième couche ;
la troisième couche contient au moins un bloc de batteries (G) qui est connecté comme suit :
(5) la borne d'entrée de cathode de l' au moins un bloc de batteries (G) est connectée avec la cathode de l'alimentation en énergie électrique, et la borne d'entrée d'anode du bloc de batteries (G) est connectée avec l'anode de l'alimentation en énergie électrique ;
(6) la borne d' entrée d' anode de l' au moins un bloc de batteries (G) dans la troisième couche est respectivement connectée avec des bornes d'entrée d'anode des blocs de batteries (D, E, F) dans la deuxième couche, un commutateur maître (K1) est agencé sur le fil de connexion du circuit principal, et un sous-commutateur (Ka2, Kb2, Kc2) est agencé sur chacun des circuits de dérivation ; la borne d'entrée de cathode de l'au moins un bloc de batteries (G) dans la troisième couche est respectivement connectée avec des bornes d'entrée de cathode des blocs de batteries (D, E, F) dans la deuxième couche, et un commutateur maître (K2) est agencé sur le fil de connexion du circuit principal ;
la borne de sortie d'anode de l'au moins un bloc de batteries (G) dans la troisième couche est respectivement connectée avec des bornes d'entrée d'anode des blocs de batteries dans la deuxième couche, et des commutateurs (Ka2, Kb2, Kc2) sont agencés sur les fils de connexion ; la borne de sortie de cathode de l'au moins un bloc de batteries (G) dans la troisième couche est respectivement connectée avec des bornes d'entrée de cathode des blocs de batteries (D, E, F) dans la deuxième couche.
